# EUROPEAN PATENT APPLICATION

(11) **EP 4 813 774 A1**
(43) Date of publication of application: **30.09.2026**
(21) Application number: 26150645.5
(22) Date of filing: 07.01.2026
(51) Int. Cl.: B60W 10/184, B60W 10/20, B60W 30/06, B60W 30/09, B60W 30/18

(54) **METHOD AND SYSTEM FOR CONTROLLING VEHICLE EXIT, STORAGE MEDIUM, AND ELECTRONIC APPARATUS**

(30) Priority: 26.03.2025 CN 202510365077
(71) Applicant: SAIC MOTOR Corporation Limited, Shanghai 201203 (CN)
(72) Inventor: Zhang, Pengjun, Shanghai, 201203 (CN); Ma, Chengjie, Shanghai, 201203 (CN); LV, Wenqiang, Shanghai, 201203 (CN); Peng, Zhong, Shanghai, 201203 (CN); Li, Zheshuai, Shanghai, 201203 (CN)
(74) Representative: Berggren Oy

(57) **Abstract**

This application discloses a method and system for controlling vehicle exiting, a storage medium, and an electronic apparatus, and relates to the technical field of vehicle control. The method includes: entering an exit mode, and acquiring vehicle environmental information; determining an exit direction of the vehicle and sending a steering angle instruction to an electric power steering system; sending a braking instruction to a vehicle braking subsystem based on a motion state of the vehicle, so as to enable the vehicle braking subsystem to control non-driving wheels of the vehicle to be tightened; and in a case where a motor torque of driving wheels of the vehicle increases from a first torque value to a second torque value, calculating a target wheel speed of the driving wheels of the vehicle, and controlling the vehicle to exit with rotation at the target yaw rate.

## Description

### Cross-Reference to Related Application

This application claims priority to Chinese Patent Application No. 202510365077.7 entitled "METHOD AND SYSTEM FOR CONTROLLING VEHICLE EXIT, STORAGE MEDIUM, AND ELECTRONIC APPARATUS", filed with the China National Intellectual Property Administration on March 26, 2025.

### Technical Field

This application relates to the technical field of vehicle control, and specifically, to a method and system for controlling vehicle exit (hereinafter, the term "vehicle exit" is referred to as that a vehicle exits a garage), a storage medium, and an electronic apparatus.

### Background

At present, the autonomous driving technology has become the mainstream trend in automotive development. The autonomous driving technology includes five levels from L1 to L5, where the autonomous driving technologies of Levels L2, L3, and L4 can achieve automated driving states in vehicles through an advanced driver assistance system (ADAS) by implementing basic functions such as automatic docking, automatic parking, automatic following, and automatic obstacle avoidance. However, the application of the autonomous driving technology in vehicle exit is not yet mature enough. Most existing methods for vehicle exit rely on manual operation, requiring drivers to have the driving abilities to operate the steering wheel and the brake pedal for controlling the vehicle exit. Nevertheless, when exiting from a parallel parking space, due to spatial constraints and the influence of surrounding obstacles, it is difficult for the drivers to quickly determine a safe direction for vehicle exit. Moreover, during the attempt to exit, collisions with the surrounding obstacles are prone to occur, making it challenging for the vehicle to exit safely and quickly.

Therefore, in the related art, there exists a technical problem that it is difficult for the vehicles to safely and quickly exit from parallel parking spaces.

As for the above technical problem, no effective solution has been proposed yet.

### Summary

Embodiments of this application provide a method and system for controlling vehicle exit, a storage medium, and an electronic apparatus, to at least solve the technical problems in the related art that it is difficult for the vehicles to safely and quickly exit from parallel parking spaces.

According to one of the embodiments of this application, a method of controlling vehicle exit is provided, including: entering an exit mode based on an exit instruction from a target object, and acquiring vehicle environmental information detected by the vehicle, wherein the exit instruction comprises at least an exit speed; determining an exit direction of the vehicle according to the vehicle environmental information and sending a steering angle instruction to the electric power steering system, so as to enable the electric power steering system to control a steering wheel of the vehicle to rotate at a steering angle of the steering wheel corresponding to the exit direction; sending a braking instruction to the vehicle braking subsystem based on a motion state of the vehicle, so as to enable the vehicle braking subsystem to control one or more non-driving wheels of the vehicle to be tightened; and in a case where a motor torque of one or more driving wheels of the vehicle increases from a first torque value to a second torque value, calculating a target wheel speed of the one or more driving wheels of the vehicle according to a target yaw rate corresponding to the exit speed, and controlling the vehicle to exit with rotation at the target yaw rate according to the target wheel speed, wherein the first torque value represents a torque value when the vehicle is in a static friction phase, and the second torque value represents a torque value when the vehicle enters a kinetic friction phase.

In an exemplary embodiment, the determining an exit direction of the vehicle according to the vehicle environmental information includes: determining, in a case where the vehicle environmental information does not indicate detecting an obstacle, a default exit direction from available exit directions of the vehicle as the exit direction; or, determining, in a case where the vehicle environmental information indicates detecting one or more obstacles and the one or more obstacles are located in the available exit directions, a first distance between the one or more obstacles and the vehicle, and determining the exit direction from the available exit directions according to a comparison result between the first distance and a safe distance.

In an exemplary embodiment, the determining the exit direction from the available exit directions according to a comparison result between the first distance and a safe distance includes: determining, in a case where the comparison result indicates that the first distance is greater than the safe distance, the default exit direction as the exit direction or determining any of the available exit directions as the exit direction; and excluding, in a case where the one or more obstacles are located in a first direction from the available exit directions and the comparison result indicates that the first distance is less than the safe distance, the first direction from the available exit directions to obtain a second direction, and determining the second direction as the exit direction.

In an exemplary embodiment, the steering angle instruction includes a steering angle start instruction and a steering angle end instruction, and the sending a steering angle instruction to the electric power steering system, so as to enable the electric power steering system to control a steering wheel of the vehicle to rotate at a steering angle of the steering wheel corresponding to the exit direction includes: sending the steering angle start instruction to the electric power steering system to enable the electric power steering system to control the steering wheel of the vehicle to start to rotate according to the steering angle of the steering wheel corresponding to the exit direction; receiving a rotated angle of the steering wheel that is fed back by the electric power steering system; and in a case of determining that the rotated angle is consistent with the steering angle of the steering wheel, sending the steering angle end instruction to the electric power steering system to enable the electric power steering system to control the steering wheel of the vehicle to stop rotating.

In an exemplary embodiment, the braking instruction includes an electronic parking brake request and a control request for an electronic stability program, and the sending a braking instruction to the vehicle braking subsystem based on a motion state of the vehicle, so as to enable the vehicle braking subsystem to control one or more non-driving wheels of the vehicle to be tightened includes: sending, in a case where the motion state of the vehicle is determined to be stationary, the electronic parking brake request and the control request for the electronic stability program to the vehicle braking subsystem to, so as to enable the vehicle braking subsystem to activate one or more brakes of the vehicle based on the electronic parking brake request, use the one or more brakes to control the one or more non-driving wheels of the vehicle to be tightened, and deactivate the electronic stability program based on the control request for the electronic stability program.

In an exemplary embodiment, during a process of controlling the vehicle to exit with rotation at the target yaw rate according to the target wheel speed, the method further includes: acquiring a third distance between the vehicle and one or more obstacles detected by the vehicle; and reducing, in a case of determining that the third distance is less than a safe distance, a torque value of the motor torque to a preset value, and controlling the vehicle to stop exiting with rotation.

In an exemplary embodiment, during a process of controlling the vehicle to exit with rotation at the target yaw rate according to the target wheel speed, the method further includes: sending, in a case of detecting that the target object triggers a condition for pausing exiting with rotation, an exit confirmation message to the target object; controlling, in a case of receiving a continuing exit instruction sent by the target object based on the exit confirmation message, the vehicle to exit with rotation, or to exit with rotation at a default yaw rate, wherein the default yaw rate is less than or equal to the target yaw rate; or, reducing, in a case of receiving an exit stopping instruction sent by the target object based on the exit confirmation message, a torque value of the motor torque to a preset value, and controlling the vehicle to stop exiting with rotation.

In an exemplary embodiment, before the entering an exit mode based on an exit instruction from a target object, and acquiring vehicle environmental information detected by the vehicle, the method further includes: determining that the vehicle satisfies a preset exit condition, wherein the preset exit condition includes at least one of: a current vehicle speed of the vehicle being less than a preset vehicle speed; a lateral acceleration of the vehicle being less than a first preset acceleration, and a longitudinal acceleration of the vehicle being less than a second preset acceleration; a current torque value of the motor torque of the vehicle being greater than a preset torque value; and a communication channel between the vehicle intelligent driving subsystem and the electric power steering system being normal, and a communication channel between the vehicle intelligent driving subsystem and the vehicle braking subsystem being normal.

In an exemplary embodiment, the method further includes: the vehicle satisfying a vehicle dynamics equation when exiting with rotation at the target yaw rate, and the vehicle dynamics equation being expressed as follows: $\sum {F}_{X} > 0 , \sum {F}_{Y} < {F}_{RLBrk} + {F}_{RRBrk} , \sum {M}_{Z} > 0 ;$ where Σ *F_{X}* represents a force acting on the vehicle in a horizontal direction of a vehicle coordinate system, Σ *F_{Y}* represents a force acting on the vehicle in a vertical direction of the vehicle coordinate system, *F_{RLBrk}* represents a braking force of a left rear wheel of the vehicle, *F_{RRBrk}* represents a braking force of a right rear wheel of the vehicle, and Σ *M_{Z}* represents a yaw moment of the vehicle.

According to another aspect of the embodiments of this application, a system for controlling vehicle exit is further provided, including: a vehicle intelligent driving subsystem, an electric power steering system, and a vehicle braking subsystem. The vehicle intelligent driving subsystem is configured to: enter an exit mode based on an exit instruction from a target object, and acquire vehicle environmental information detected by a vehicle, wherein the exit instruction includes at least an exit speed; determine an exit direction of the vehicle according to the vehicle environmental information and send a steering angle instruction to the electric power steering system, so as to enable the electric power steering system to control a steering wheel of the vehicle to rotate at a steering angle of the steering wheel corresponding to the exit direction; send a braking instruction to the vehicle braking subsystem based on a motion state of the vehicle, so as to enable the vehicle braking subsystem to control one or more non-driving wheels of the vehicle to be tightened; and in a case where a motor torque of one or more driving wheels of the vehicle increases from a first torque value to a second torque value, calculate a target wheel speed of the one or more driving wheels of the vehicle according to a target yaw rate corresponding to the exit speed, and control the vehicle to exit with rotation at the target yaw rate according to the target wheel speed, wherein the first torque value represents a torque value when the vehicle is in a static friction phase, and the second torque value represents a torque value when the vehicle enters a kinetic friction phase.

According to yet another aspect of the embodiments of this application, a computer-readable storage medium is further provided, and stores a computer program therein. The computer program is configured to perform, when executed, the above-mentioned method of controlling vehicle exit.

According to still another aspect of the embodiments of this application, an electronic apparatus is further provided, and includes a memory, a processor, and a computer program stored on the memory and executable by the processor. The above-mentioned processor performs the above-mentioned method of controlling vehicle exit through the computer program.

According to a still another aspect of the embodiments of this application, a computer program product is further provided, and includes a computer program. The computer program, when executed by a processor, performs the above-mentioned method of controlling vehicle exit.

In the embodiments of this application, the exit mode is entered based on the exit instruction from the target object, and the vehicle environmental information detected by the vehicle is acquired, where the exit instruction includes at least an exit speed; the exit direction of the vehicle is determined according to the vehicle environmental information and the steering angle instruction is sent to the electric power steering system, so as to enable the electric power steering system to control the steering wheel of the vehicle to rotate at the steering angle of the steering wheel corresponding to the exit direction; the braking instruction is sent to the vehicle braking subsystem based on the motion state of the vehicle, so as to enable the vehicle braking subsystem to control the non-driving wheels of the vehicle to be tightened; and in the case where the motor torque of the driving wheels of the vehicle increases from the first torque value to the second torque value, the target wheel speed of the driving wheels of the vehicle is calculated according to the target yaw rate corresponding to the exit speed, and the vehicle is controlled to exit with rotation at the target yaw rate according to the target wheel speed, where the first torque value represents the torque value when the vehicle is in the static friction phase, and the second torque value represents the torque value when the vehicle enters the kinetic friction phase. By adopting the above-mentioned technical solution, the vehicle intelligent driving subsystem intelligently analyzes the vehicle environmental information, automatically determines the exit direction, and controls the electric power steering system and the vehicle braking subsystem to work collaboratively. The technical problem that it is difficult for the vehicles to safely and quickly exit from parallel parking spaces is solved, thereby simplifying the exit operation of the driver, reducing collision risks, achieving automatic, safe, and efficient vehicle exit, and providing the driver with a more convenient driving experience.

### Brief Description of the Drawings

The accompanying drawings herein are incorporated into the specification to form a part of the specification, illustrate embodiments conforming to this application, and are used to explain the principle of this application together with the specification.

In order to more clearly describe the technical solutions in the embodiments of this application or in the prior art, the accompanying drawings used for describing the embodiments or the prior art will be briefly described below. Apparently, those of ordinary skill in the art may still derive other accompanying drawings from these accompanying drawings without paying creative efforts.
FIG. 1 is a schematic diagram of a hardware environment for a method of controlling vehicle exit according to an embodiment of this application;
FIG. 2 is a flowchart of a method of controlling vehicle exit according to an embodiment of this application;
FIG. 3 is a schematic diagram of a force analysis during a vehicle exit process according to an embodiment of this application;
FIG. 4 is a schematic diagram of a state machine of a vehicle intelligent driving subsystem according to an embodiment of this application; and
FIG. 5 is a structural block diagram of a system of controlling vehicle exit according to an embodiment of this application.

### Detailed Description of the Embodiments

In order to make those skilled in the art better understand solutions of this application, the technical solutions in the embodiments of this application will be clearly and completely described below in conjunction with the accompanying drawings in the embodiments of this application, and it is apparent that the described embodiments are merely a part rather all the embodiments of this application. Based on the embodiments of this application, all other embodiments obtained by those of ordinary skill in the art without paying creative efforts shall fall within the protection scope of this application.

It should be noted that the terms such as "first" and "second" of the specification and claims of this application and the above-mentioned accompanying drawings are used to distinguish similar objects but are not necessarily intended to describe specific sequences or precedence orders. It should be understood that such used data is interchangeable where appropriate, such that the embodiments of this application described herein may be implemented in orders other than those illustrated or described herein. In addition, the terms "include/comprise", "have/has", and any variations thereof are intended to encompass non-exclusive inclusions. For example, a process, a method, a system, a product, or a device including a series of steps or units is not necessarily limited to those explicitly-listed steps or units, but may include other steps or units that are not explicitly listed or inherent to the process, the method, the system, the product, or the device.

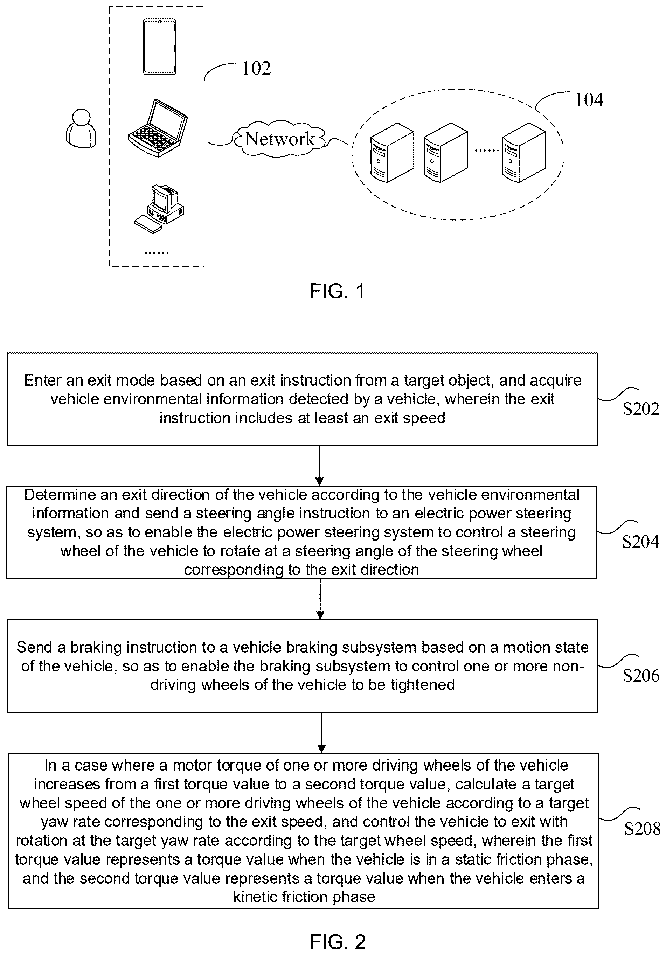

According to one aspect of an embodiment of this application, a method of controlling vehicle exit is provided. The method of controlling vehicle exit is widely applicable in control application scenarios for vehicle devices, such as automated controlled vehicles and semi-automated controlled vehicles. Optionally, in this embodiment, the above-mentioned method of controlling vehicle exit may be applied in a hardware environment shown in FIG. 1 composed of a vehicle-end device 102 and a server 104. As shown in FIG. 1, the server 104 is connected with the vehicle-end device 102 through a network, and may be configured to provide service (e.g., application services) to a terminal or a client installed on the terminal. A database may be arranged on the server or independent of the server, and may be configured to provide data storage service for the server 104. Cloud computing and/or edge computing services may be configured on the server or independent of the server, and may be configured to provide data computation service for the server 104.

The above-mentioned network may include, but is not limited to, at least one of the following: a wired network or a wireless network. The above-mentioned wired network may include, but is not limited to, at least one of the following: a wide area network, a metropolitan area network, or a local area network. The above-mentioned wireless network may include, but is not limited to, at least one of the following: wireless fidelity (WIFI) and Bluetooth.

In this application, an electronic parking brake (EPB) system, an electric power steering (EPS) system, and an intelligent braking system (IBS) need to communicate and confirm states for collaboratively operating and ensuring the safe execution of vehicle exit maneuvers.

The EPB is a system that implements parking braking through an electronic control method. During a vehicle exit process in this application, the EPB is requested to clamp two rear wheels to prevent the vehicle from moving forward or backward in an uncontrolled manner due to the driving of front wheels during the vehicle exit, thereby ensuring that the vehicle may rotate stably in a preset direction at the beginning of the vehicle exit maneuver. Therefore, during the vehicle exit process, the EPB needs to maintain a locked state of the two rear wheels until the vehicle exit maneuver is completed.

The EPS is a system that provides steering assistance to a driver, and it uses an electric motor instead of a conventional hydraulic system to provide steering force. During the vehicle exit process in this application, the EPS receives a steering angle of the steering wheel target signal sent by the system and adjusts a steering angle of the front wheels according to the signal, so that the vehicle exits from the garage by means of stable rotation in a preset direction during the vehicle exit. "Handshake" between the EPS and a vehicle intelligent driving subsystem (e.g., ADAS) ensures that a steering system is ready and capable of executing control instructions. The "handshake" represents the confirmation of mutual states through signal exchange between two or more systems to enable a safe collaborative operation. In this application, the electric power steering system is, for example, the EPS.

The IBS is an integrated braking system that may intelligently manage a vehicle braking process, including control of the EPB. During the vehicle exit process, the IBS receives an EPB clamping request and a temporary deactivation request for an electronic stability program (ESP) from the intelligent driving subsystem, ensuring that the braking system operates as required and feeding back an actual state of the braking system to the vehicle intelligent driving subsystem to confirm whether the EPB and the ESP enter correct modes according to instructions. For example, a vehicle braking subsystem in this application may be composed of the electronic parking brake system EPB and the intelligent braking system IBS.

The ESP is responsible for stability control of the vehicle, preventing the vehicle from losing control during driving by adjusting braking forces on the wheels and an engine torque. In the method of controlling vehicle exit in this application, the ESP is temporarily deactivated to enable the vehicle to exit with rotation at a certain yaw rate. After the exit process is completed, the ESP may return to a normal operating mode, restoring stability control of the vehicle.

In this application, the vehicle intelligent driving subsystem is a central system of the method of controlling vehicle exit, and collects and analyzes various information from the vehicle inside and outside, such as obstacle positions, vehicle speeds, accelerations, and driver instructions. Based on these information, the vehicle intelligent driving subsystem determines a direction and a speed of the vehicle exit, and then sends control commands to other systems such as the EPB, the EPS, and the IBS. For example, when a one-click exit function is activated, the vehicle intelligent driving subsystem sends requests to the EPS and the IBS, requiring the EPS and the IBS to enter an exit control mode. After receiving the requests, the EPS and the IBS feed back confirmation messages, indicating the reception of the control instructions. The vehicle intelligent driving subsystem proceeds with subsequent steps, such as controlling a front-wheel driving torque, only after receiving the confirmation messages from the two systems.

In summary, through complex signal exchange and state monitoring, the intelligent driving subsystem, the EPB, the EPS, and the IBS collaborate closely to form a coordinated control system, thereby reducing potential risks caused by incoordination between the systems and causing the vehicle exit safely and quickly.

In this embodiment, the method of controlling vehicle exit is provided, applicable to the above-mentioned terminal device. FIG. 2 is a flowchart of a method of controlling vehicle exit according to an embodiment of this application. The process includes the following steps:
Step S202: Enter an exit mode based on an exit instruction from a target object, and acquire vehicle environmental information detected by a vehicle, where the exit instruction includes at least an exit speed.

Optionally, in this step, a driver (i.e., the target object) may activate a vehicle one-click exit function by operating a one-click exit switch on a large vehicle operation screen, while selecting an exit speed or a default exit speed provided by the intelligent driving subsystem. The exit speed corresponds one-to-one with the vehicle yaw rate. The exit speed displayed on the large vehicle operation screen includes a slow speed, a medium speed, and a fast speed. If the driver selects the medium speed, the vehicle is controlled to rotate at the yaw rate of 7 deg/s.

Step S204: Determine an exit direction of the vehicle according to the vehicle environmental information and send a steering angle instruction to the electric power steering system, so as to enable the electric power steering system to control a steering wheel of the vehicle to rotate at a steering angle of the steering wheel corresponding to the exit direction.

Step S206: Send a braking instruction to the vehicle braking subsystem based on a motion state of the vehicle, so as to enable the vehicle braking subsystem to control non-driving wheels of the vehicle to be tightened.

Step S208: In a case where a motor torque of driving wheels of the vehicle increases from a first torque value to a second torque value, calculate a target wheel speed of the driving wheels of the vehicle according to a target yaw rate corresponding to the exit speed, and control the vehicle to exit with rotation at the target yaw rate according to the target wheel speed, where the first torque value represents a torque value when the vehicle is in a static friction phase, and the second torque value represents a torque value when the vehicle enters a kinetic friction phase.

For this step, the case where the motor torque of the driving wheels of the vehicle increases from the first torque value (e.g., greater than 0) to the second torque value may indicate that, during the static friction process when the wheels of the vehicle do not slip, the torque value is controlled to increase continuously until the wheels start to slip and enter the kinetic friction phase. Then, in the kinetic friction phase, the target wheel speed of the front wheels (representing the driving wheels) is calculated according to the target yaw rate, and then proportional, integral, and differential (PID) closed-loop control is performed through a front axle rotational speed to control the vehicle to rotate stably at a certain yaw rate. The target yaw rate corresponds to the exit speed selected by the driver. For example, the slow speed corresponds to the target yaw rate of 5 deg/s, the medium speed corresponds to the target yaw rate of 7 deg/s, and the high speed corresponds to the target yaw rate of 10 deg/s. In this step, the vehicle is precisely controlled to exit with rotation according to the motion state and the target yaw rate of the vehicle, significantly enhancing an automation level and safety of the exit operation.

Through the above-mentioned steps, the exit mode is entered based on the exit instruction from the target object, and the vehicle environmental information detected by the vehicle is acquired, where the exit instruction includes at least the exit speed; the exit direction of the vehicle is determined according to the vehicle environmental information and the steering angle instruction is sent to the electric power steering system, so as to enable the electric power steering system to control the steering wheel of the vehicle to rotate at the steering angle of the steering wheel corresponding to the exit direction; the braking instruction is sent to the vehicle braking subsystem based on the motion state of the vehicle, so as to enable the vehicle braking subsystem to control the non-driving wheels of the vehicle to be tightened; and in the case where the motor torque of the driving wheels of the vehicle increases from the first torque value to the second torque value, the target wheel speed of the driving wheels of the vehicle is calculated according to the target yaw rate corresponding to the exit speed, and the vehicle is controlled to exit with rotation at the target yaw rate according to the target wheel speed, where the first torque value represents the torque value when the vehicle is in the static friction phase, and the second torque value represents the torque value when the vehicle enters the kinetic friction phase. By adopting the above-mentioned technical solution, the vehicle intelligent driving subsystem intelligently analyzes the vehicle environmental information, automatically determines the exit direction, and controls the electric power steering system and the vehicle braking subsystem to work collaboratively. The technical problem that it is difficult for the vehicle to exit the parallel parking spaces is solved, thereby simplifying the exit operation of the driver, reducing collision risks, achieving automatic, safe, and efficient vehicle exit, and providing the driver with a more convenient driving experience.

In an exemplary embodiment, a process of implementing the determination of the exit direction of the vehicle according to the vehicle environmental information may include: in a case where the vehicle environmental information does not indicate obstacles, determining a default exit direction from available exit directions of the vehicle as the exit direction; or, in a case where the vehicle environmental information indicates detecting one or more obstacles and the one or more obstacles are located in the available exit directions, determining a first distance between the obstacles and the vehicle, and determining the exit direction from the available exit directions according to a comparison result between the first distance and a safe distance. In this embodiment, the vehicle is controlled to intelligently avoid the obstacles during vehicle exit, thereby reducing potential collision risks and enhancing the exit safety.

A safe distance refers to, for example, a minimum distance that the vehicle does not collide with obstacles when the vehicle exits the garage.

Optionally, the vehicle environmental information, for example, may be obtained through detection by a camera or radar of the vehicle.

In an exemplary embodiment, in the technical solution of determining the exit direction from the available exit directions according to a comparison result between the first distance and the safe distance, the steps include: in a case where the comparison result indicates that the first distance is greater than the safe distance, determining the default exit direction as the exit direction or determining any of the available exit directions as the exit direction; and in a case where the obstacles are located in the first direction from the available exit directions and the comparison result indicates that the first distance is less than the safe distance, excluding the first direction from the available exit directions to obtain a second direction, and determining the second direction as the exit direction. A dynamic adjustment mechanism for exit direction proposed in this embodiment can ensure that the vehicle may find a safe exit path when confronted with different obstacles.

Alternatively, in a case where the obstacles are located in all directions from the available exit directions of the vehicle and the comparison result indicates that the first distance is less than the safe distance, a prompt message is generated to prompt the target object that no exit direction exists.

Optionally, in an embodiment, after the vehicle intelligent driving subsystem receives the exit instruction, the driver is provided with the exit direction according to perceived obstacle information. The obstacle information may include whether obstacles are detected and a distance (corresponding to the first distance) between the obstacles and a vehicle position, so as to determine whether exit requirements are met.

Specifically: if a distance between an obstacle on a left side of the vehicle and the vehicle is greater than the safe distance, the exit direction is the left side. If there is an obstacle on a right side of the vehicle or a distance between the obstacle on the right side of the vehicle and the vehicle is less than the safe distance, the exit direction is the left side.

If obstacles are present on both sides, the side where the distance between the obstacle and the vehicle is greater than the safe distance is the available exit direction. If obstacles are present on both sides and the distances between the obstacles and the vehicle are both less than the safe distance, the driver is prompted that there is no available exit direction.

If there is no obstacle on the left side of the vehicle, the exit direction is the left side. If there is no obstacle on both sides, the default exit direction is the left side.

In an exemplary embodiment, the steering angle instruction includes a steering angle start instruction and a steering angle end instruction. Specific implementation steps for sending the steering angle instruction to the electric power steering system, so as to enable the electric power steering system to control the steering wheel of the vehicle to rotate at the steering angle of the steering wheel corresponding to the exit direction include: sending the steering angle start instruction to the electric power steering system to enable the electric power steering system to control the steering wheel of the vehicle to start to rotate according to the steering angle of the steering wheel corresponding to the exit direction; receiving a rotated angle of the steering wheel that is fed back by the electric power steering system; and in a case of determining that the rotated angle is consistent with the steering angle of the steering wheel, sending the steering angle end instruction to the electric power steering system, so as to enable the electric power steering system to control the steering wheel of the vehicle to stop rotating. This embodiment ensures that the vehicle exits according to a preset path by controlling a rotation angle of the steering wheel, thereby improving the exit accuracy.

The steering angle of the steering wheel, for example, refers to a maximum steering angle of the steering wheel, without considering factors such as a vehicle parking position and a distance to surrounding obstacles that may affect the steering angle of the steering wheel.

In this embodiment, based on a handshake mechanism between the vehicle intelligent driving subsystem and the EPS, after the exit function is activated, the EPS may be requested to enter the exit control mode, and the steering angle instruction is sent. The EPS responds to an exit control request and feeds back an actual steering angle, and after vehicle exit is completed, the vehicle intelligent driving subsystem sends the steering angle end instruction to the EPS.

In an exemplary embodiment, the braking instruction includes an electronic parking brake request and a control request for the electronic stability program. A solution of sending the braking instruction to the vehicle braking subsystem based on the motion state of the vehicle, so as to enable the vehicle braking subsystem to control the non-driving wheels of the vehicle to be tightened may be implemented through the following steps: in a case where the motion state of the vehicle is determined to be stationary, sending the electronic parking brake request and the control request for the electronic stability program to the vehicle braking subsystem to allow the vehicle braking subsystem to activate brakes of the vehicle based on the electronic parking brake request, use the brakes to control the non-driving wheels of the vehicle to be tightened, and deactivate the electronic stability program based on the control request for the electronic stability program. This embodiment provides a braking control method. Necessary braking force is provided during the exit process to enhance the stability of the vehicle before exit, thereby improving the safety of vehicle exit.

Based on the above-mentioned content, in an optional embodiment, when the vehicle is stationary, the EPB is requested to tighten and temporarily deactivate the automatic control request for the ESP, thereby prompting the driver to release a brake pedal. In this case, the EPB clamping force is controlled according to the maximum clamping force to ensure that the two rear wheels do not roll. The vehicle intelligent driving subsystem sends an EPBAppdReq (corresponding to the electronic parking brake request) to the EPB, receives an EPB state (Unknown, BrkApplied, and BrkReleased) from the EPB, and receives an ESPMode state (OFF and Normal) from the EPS. When "EPBAppd == BrkApplied and ESPMode == OFF", the next operation may be performed.

The EPBAppdReq, the EPB state, and the ESPMode state are configured to monitor and control braking and stability systems of the vehicle. The following is a brief explanation of these signals and states:
The EPB application request (EPBAppdReq) is a request signal configured to instruct the intelligent braking system (IBS) to control the EPB. That is, it requests the EPB to clamp or increase the braking force. During the vehicle exit process, when the vehicle intelligent driving subsystem determines that the rear wheels of the vehicle need to be fixed to prevent unnecessary slipping, the EPBAppdReq signal may be sent to the IBS, thereby ensuring that as the driving torque of the front-wheel increases, a rear part of the vehicle does not move uncontrollably, and thus maintaining vehicle stability and enabling rotation in the preset direction.

"Unknown" indicates that a current state of the EPB system is unknown, which may be, for example, due to the system being in an initialization phase or a failure to read the state caused by communication interruption.

"BrkApplied" indicates that the EPB brake has been activated, and the rear wheels are clamped or the braking force is applied.

"BrkReleased" indicates that the EPB brake has been released, a clamping state of the rear wheels is released, and the rear wheels may freely roll.

"OFF" represents that the electronic stability program (ESP) is in an off state, meaning that the vehicle intelligent driving subsystem does not actively intervene in the stability control of the vehicle, so as to enable a greater control freedom for the driver or a vehicle control strategy. For example, during one-click exit, to achieve a specific vehicle dynamic state, the ESP automatic control request needs to be deactivated, temporarily pausing the active stability control function of the ESP.

"Normal" represents that the ESP is in a normal operating state, and the vehicle intelligent driving subsystem actively intervenes according to the vehicle dynamic state (e.g., oversteer or understeer), and vehicle stability is kept by adjusting the braking torque and the engine torque, thereby preventing loss of control.

The above-mentioned signals or states are crucial in vehicle exit control, ensuring stability and safety of the vehicle during the one-click exit process. For example, before exit, the vehicle intelligent driving subsystem checks the EPB state to ensure that the rear wheels are effectively locked, and also checks the ESPMode state. If necessary, temporary deactivation of the ESP is requested to allow the vehicle to execute specific dynamic operations. Throughout the process, the vehicle intelligent driving subsystem continuously monitors these states and adjusts or pauses the exit maneuver if necessary to respond to unexpected situations.

"EPBAppd == BrkApplied" indicates that the electronic parking brake (EPB) system has received and executed a request to apply the braking force, meaning that the EPB is currently in a state of clamping the rear wheels. This step is necessary during the exit process because fixing the rear wheels may prevent unnecessary slipping due to the increased front-wheel driving torque during the vehicle exit process, ensuring the exiting with rotation of the vehicle according to the preset yaw rate and direction.

"ESPMode == OFF" indicates that the electronic stability program (ESP) is currently in an off mode. The ESP system operates during vehicle dynamic driving, and vehicle stability is kept by adjusting the braking torque and the engine torque, to prevent slipping or loss of control. However, during the exit control process, to achieve vehicle rotation, the ESP needs to be temporarily deactivated, so as to enable the vehicle intelligent driving subsystem to more directly control the wheel torque without intervention from the ESP. Deactivating the ESP allows precise adjustment of the driving torque of the front-wheel and the braking force of the rear-wheel, so as to achieve stable vehicle rotation.

Therefore, "EPBAppd == BrkApplied and ESPMode == OFF" is a crucial step during the exit process, ensuring that before performing any operations that may cause vehicle dynamic changes, the vehicle is in a stable and controllable state. For example, when the vehicle intelligent driving subsystem determines that the rear wheels are fixed and the ESP does not interfere with the vehicle dynamic control, subsequent exit steps, such as controlling the front-axle motor torque to increase at a preset slope may be safely and continuously performed, so that the vehicle rotates according to the target yaw rate.

In an exemplary embodiment, during the process of controlling the vehicle to exit with rotation at the target yaw rate according to the target wheel speed, further, a third distance between the vehicle and an obstacle detected by the vehicle may also be acquired. In a case of determining that the third distance is less than the safe distance, the torque value of the motor torque is reduced to a preset value, controlling the vehicle to stop exiting with rotation. According to this embodiment, timely deceleration or stopping may be achieved when the vehicle approaches the obstacle, enhancing the safety of the vehicle exit process.

In an optional embodiment, during the process of exiting with rotation of the vehicle, if the vehicle intelligent driving subsystem determines that the distance between the obstacle and the vehicle position is less than the safe distance, exit is paused, and the motor torque value is controlled to drop to 0 (correspond to the preset value), causing the vehicle to stop rotating and remain stationary.

In an exemplary embodiment, during the process of controlling the vehicle to exit with rotation at the target yaw rate according to the target wheel speed, in a case of detecting that the target object triggers a condition for pausing the exiting with rotation, an exit confirmation message is sent to the target object; in a case of receiving a continuing exit instruction sent by the target object based on the exit confirmation message, the vehicle is controlled to exit with rotation, or controlled to exit with rotation at a default yaw rate, where the default yaw rate is less than or equal to the target yaw rate; and in a case of receiving an exit stopping instruction sent by the target object based on the exit confirmation message, the torque value of the motor torque is reduced to the preset value, and the vehicle is controlled to stop exiting with rotation. This embodiment, based on an interaction mechanism with the target object, makes the exit process more flexible and controllable. A timely response may be made to emergencies requiring a pause or stop during the exit process, thereby enhancing the controllability and safety of the exit process.

Based on the above-mentioned embodiment, in this application, whether to pause, continue, or terminate the exit function may be determined during the exit process based on driver's operations or a relative position between the obstacles and the vehicle. For example, during the vehicle exit process, the relative position between the obstacles and the vehicle is monitored in real time. Whether to pause the exit is determined in advance according to the potential for collision at the relative position, thereby improving exit safety.

Optionally, in this embodiment, during the vehicle process of exiting with rotation, the condition for pausing the exiting with rotation may be triggered by the driver's operations such as canceling the exit, or pressing an accelerator pedal or the brake pedal, the exit confirmation message about whether to continue the exit is sent to the driver. If the driver terminates the exit, the torque value is controlled to drop to 0. If the driver continues the exit, the exiting with rotation continues. Alternatively, after the vehicle rotates by a certain angle (corresponding to the default yaw rate, which is not greater than the target yaw rate), the one-click exit may be terminated.

In an exemplary embodiment, before entering the exit mode based on the exit instruction from the target object and acquiring the vehicle environmental information detected by the vehicle, further, the following technical solution is proposed: determining that the vehicle satisfies a preset exit condition, where the preset exit condition includes at least one of: the current speed of the vehicle being less than a preset speed; a lateral acceleration of the vehicle being less than a first preset acceleration, and a longitudinal acceleration of the vehicle being less than a second preset acceleration; a current torque value of the motor torque of the vehicle being greater than a preset value; and a communication channel between the vehicle intelligent driving subsystem and the electric power steering system being normal, and a communication channel between the vehicle intelligent driving subsystem and the vehicle braking subsystem being normal. This embodiment reduces the exit failure or safety risks caused by poor vehicle states by setting condition checks before exit.

Optionally, the preset torque value is, for example, 0.

Optionally, the exit condition may also be set to include controller communication failure, the vehicle speed being non-stationary, the vehicle door being unclosed, etc. If any of the following cases exists, the preset exit condition is not met: the vehicle speed being great (the current vehicle speed is greater than the preset vehicle speed); the vehicle being on a longitudinal or a lateral slope (the lateral acceleration of the vehicle is greater than the first preset acceleration, or the longitudinal acceleration of the vehicle is greater than the second preset acceleration); the driving motor torque being restricted (the current torque value is less than the preset torque value); and communication failures with braking systems such as an IBS controller resulting in invalid wheel speed signals, etc.

In an exemplary embodiment, when the vehicle exits with rotation at the target yaw rate, a dynamics equation of the vehicle is satisfied, which is expressed as follows: $\sum {F}_{X} > 0 , \sum {F}_{Y} < {F}_{RLBrk} + {F}_{RRBrk} , \sum {M}_{Z} > 0 ;$ where Σ *F_{X}* represents the force acting on the vehicle in a horizontal direction of a vehicle coordinate system, *Σ F_{Y}* represents the force acting on the vehicle in a vertical direction of the vehicle coordinate system, *F_{RLBrk}* represents the braking force of a left rear wheel of the vehicle, ***F_{RRBrK}*** represents the braking force of a right rear wheel of the vehicle, and Σ *M_{Z}* represents a yaw moment of the vehicle.

To better understand the process of the above-mentioned method of controlling vehicle exit, the following provides an explanation of the process of the above-mentioned method for implementing vehicle exit control in conjunction with optional embodiments. However, this explanation is not intended to limit the technical solutions of the embodiments in this application.

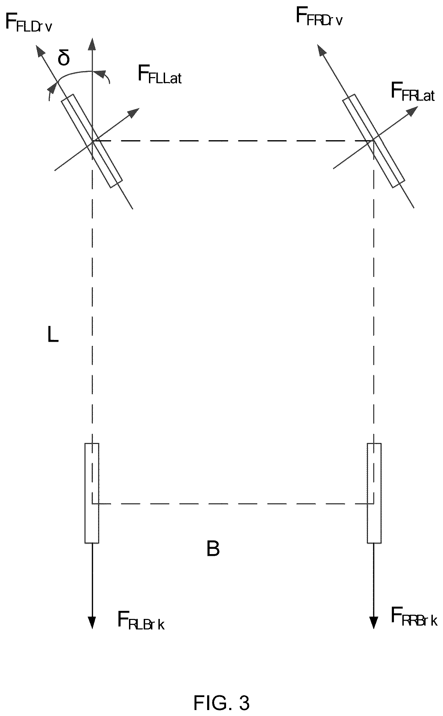

In this embodiment, a method of controlling vehicle exit is provided. FIG. 3 is a schematic diagram of force analysis during a vehicle exit process according to an embodiment of this application. As shown in FIG. 3, the vehicle satisfies a vehicle dynamics equation during the vehicle exit process of exiting with rotation. That is, the force acting on the entire vehicle in a longitudinal direction is less than a static friction force, ensuring that the vehicle does not move forward. The force in a lateral direction is greater than zero, so as to enable a lateral movement of the vehicle. The yaw of the entire vehicle is greater than zero, so that the vehicle rotates around a center of a rear axle. The statement "the yaw of the entire vehicle is greater than zero" means that the yaw moment of the vehicle around a vertical axis (Z-axis) is greater than zero. In a process of performing the method of controlling one-click vehicle exit, when the vehicle is subjected to combined effects of the front-wheel driving torque and rear-wheel braking force, if the generated yaw moment M_{Z} around the vertical axis of the vehicle is greater than zero, it indicates that the vehicle is laterally rotating in a clockwise or counterclockwise direction. Specifically, the rotation direction depends on the steering of the front wheels and the distribution of the braking force on the rear wheels. $\sum {F}_{Y} = {F}_{FLDrv} * cos δ + {F}_{FLLat} * sin δ + {F}_{FRDrv} * cos δ + {F}_{FRLat} * sin δ < {F}_{RLBrk} + {F}_{RRBrk}$ $\sum {F}_{X} = {F}_{FLDrv} * sin δ - {F}_{FLLat} * cos δ + {F}_{FRDrv} * sin δ - {F}_{FRLat} * cos δ > 0$ $\begin{matrix}\sum {M}_{Z} = {F}_{FLDrv} * \sqrt{{L}^{2} + {\left(\frac{B}{2}\right)}^{2}} * sin \left(δ-arctant\left(\frac{\frac{B}{2}}{L}\right)\right) \\ - {F}_{FLLat} * \sqrt{{L}^{2} + {\left(\frac{B}{2}\right)}^{2}} * cos \left(δ-arctant\left(\frac{\frac{B}{2}}{l}\right)\right) \\ + {F}_{FRDrv} * \frac{\frac{B}{2}}{cos δ} + \left(L-\frac{B}{2}*tanδ\right) * sin δ \\ - {F}_{FRLat} * \left(L-\frac{B}{2}*tanδ\right) * cos δ > 0\end{matrix}$ where δ represents a front-wheel steering angle, *F_{FLDrv}* represents the driving force of a left front wheel, *F_{FLLat}* represents a lateral resistance of the left front wheel, *F_{FRDrv}* represents the driving force of a right front wheel, *F_{FLRat}* represents a lateral resistance of the right front wheel, *F_{RLBrk}* represents the braking force of the left rear wheel, *F_{RRBrk}* represents the braking force of the right rear wheel, L represents a wheelbase of the vehicle, and B represents a track width of the vehicle.

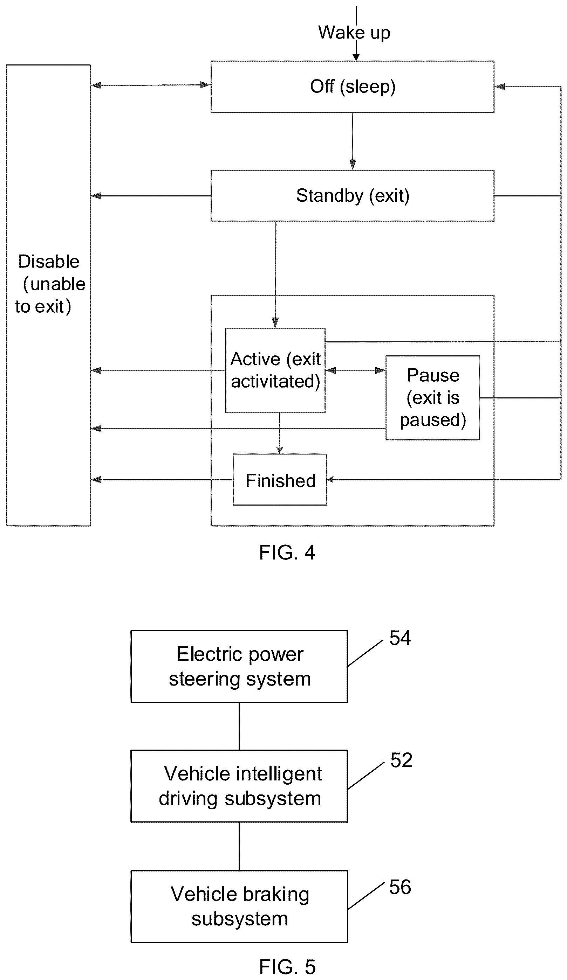

The state changes during the vehicle exit process will be described in conjunction with FIG. 4. Specific steps include:
1. If it is monitored that the driver does not turn on an exit switch, the vehicle intelligent driving subsystem remains in the Off mode.
2. If it is monitored that the driver turns on the exit switch, the vehicle intelligent driving subsystem enters a StandBy mode (corresponding to the exit mode) according to a wake-up instruction and begins to exit according to the exit direction. During the exit, the vehicle intelligent driving subsystem completes a handshake with the EPS\IBS in the StandBy mode and then enters an Active state.
3. In the Active state, associated components are controlled to reach a target state, that is, the front-wheel driving torque is controlled to maintain stable yaw of the vehicle.
4. In the Active state, if the driver triggers a pause action or an obstacle is detected, a Pause state is entered, initiating a temporary pause function, and the driver needs to confirm safety and click a continuing button to proceed with the exit.
5. After completing the exit, a Finished state is automatically entered, and a request that the driver takes over control of the vehicle is sent to the driver, thereby exiting the StandBy mode.
6. If it is monitored that the driver turns on the exit switch, but the vehicle state does not satisfy the exit conditions such as the controller communication failure, the non-stationary vehicle speed, or the unclosed doors, a Disable mode is entered, and a display color of an exit button is changed to gray to prevent the initiation of the exit operation, and the driver is notified that the one-click exit function is unavailable.

Based on the above-mentioned steps, this application may allow for automatic, safe, and efficient exit for the vehicle in response to the exit instruction from the driver. The exit direction is determined according to information about obstacles surrounding the vehicle, and after the driver confirms the exit direction, the vehicle is automatically controlled to exit with rotation.

According to the description of the above-mentioned implementations, those skilled in the art can clearly know that the method according to the above-mentioned embodiments may be implemented by software and a necessary general-purpose hardware platform, and certainly, may also be implemented by hardware, but the former is a preferred implementation in most cases. Based on such an understanding, the technical solutions of this application essentially, or the part contributing to the prior art may be presented in the form of a software product. The computer software product is stored in a storage medium (e.g., a read-only memory (ROM)/random access memory (RAM), a magnetic disk, and an optical disc), and includes several instructions to cause a terminal device (e.g., a mobile phone, a computer, a server, or a network device) to perform the methods described in the embodiments of this application.

FIG. 5 is a structural block diagram of a system for controlling vehicle exit according to an embodiment of this application. As shown in FIG. 5, the system includes a vehicle intelligent driving subsystem 52, an electric power steering system 54, and a vehicle braking subsystem 56.

The vehicle intelligent driving subsystem is configured to enter an exit mode based on an exit instruction from a target object, and acquire vehicle environmental information detected by a vehicle, where the exit instruction includes at least an exit speed; determine an exit direction of the vehicle according to the vehicle environmental information and send a steering angle instruction to the electric power steering system, so as to enable the electric power steering system to control a steering wheel of the vehicle to rotate at a steering angle of the steering wheel corresponding to the exit direction; send a braking instruction to the vehicle braking subsystem based on a motion state of the vehicle, so as to enable the vehicle braking subsystem to control non-driving wheels of the vehicle to be tightened; and in a case where a motor torque of driving wheels of the vehicle increases from a first torque value to a second torque value, calculate a target wheel speed of the driving wheels of the vehicle according to a target yaw rate corresponding to the exit speed, and control the vehicle to exit with rotation at the target yaw rate according to the target wheel speed, where the first torque represents a torque value when the vehicle is in a static friction phase, and the second torque represents a torque value when the vehicle enters a kinetic friction phase.

Through the above-mentioned system, the exit mode is entered based on the exit instruction from the target object, and the vehicle environmental information detected by the vehicle is acquired, where the exit instruction includes at least the exit speed; the exit direction of the vehicle is determined according to the vehicle environmental information and the steering angle instruction is sent to the electric power steering system, so as to enable the electric power steering system to control the steering wheel of the vehicle to rotate at the steering angle of the steering wheel corresponding to the exit direction; the braking instruction is sent to the vehicle braking subsystem based on the motion state of the vehicle, so as to enable the vehicle braking subsystem to control the non-driving wheels of the vehicle to be tightened; and in the case where the motor torque of the driving wheels of the vehicle increases from the first torque value to the second torque value, the target wheel speed of the driving wheels of the vehicle is calculated according to the target yaw rate corresponding to the exit speed, and the vehicle is controlled to exit with rotation at the target yaw rate according to the target wheel speed, where the first torque represents the torque value when the vehicle is in the static friction phase, and the second torque represents the torque value when the vehicle enters the kinetic friction phase. By adopting the above-mentioned technical solution, according to the method of controlling vehicle exit, the vehicle intelligent driving subsystem intelligently analyzes the vehicle environmental information, automatically determines the exit direction, and controls the electric power steering system and the vehicle braking subsystem to work collaboratively. The technical problem that that it is difficult for the vehicle to safely and quickly exit from parallel parking spaces is solved, thereby simplifying the exit operation of the driver, reducing collision risks, achieving automatic, safe, and efficient vehicle exit, and providing the driver with a more convenient driving experience.

Optionally, communications may also be established between the electric power steering system 54 and the vehicle braking subsystem 56, which will not be elaborated further in this application.

In an exemplary embodiment, the vehicle intelligent driving subsystem is further configured to: determine, in a case where the vehicle environmental information does not indicate detecting obstacles, a default exit direction from available exit directions of the vehicle as the exit direction; or, determine, in a case where the vehicle environmental information indicates detecting one or more obstacles and the one or more obstacles are located in the available exit directions, a first distance between the obstacles and the vehicle, and determine the exit direction from the available exit directions according to a comparison result between the first distance and a safe distance.

In an exemplary embodiment, the vehicle intelligent driving subsystem is further configured to: determine, in a case where the comparison result indicates that the first distance is greater than the safe distance, the default exit direction as the exit direction or determine any of the available exit directions as the exit direction; and exclude, in a case where the obstacles are located in the first direction from the vehicle available exit directions and the comparison result indicates that the first distance is less than the safe distance, the first direction from the available exit directions to obtain a second direction, and determine the second direction as the exit direction.

In an exemplary embodiment, the vehicle intelligent driving subsystem is further configured to: send a steering angle start instruction to the electric power steering system to enable the electric power steering system to control the steering wheel of the vehicle to start to rotate according to the steering angle of the steering wheel corresponding to the exit direction; receive a rotated angle of the steering wheel that is fed back by the electric power steering system; and in a case of determining that the rotated angle is consistent with the steering angle of the steering wheel, send a steering angle end instruction to the electric power steering system, so as to enable the electric power steering system to control the steering wheel of the vehicle to stop rotating.

In an exemplary embodiment, the vehicle intelligent driving subsystem is further configured to: send, in a case where the motion state of the vehicle is determined to be stationary, an electronic parking brake request and a control request for an electronic stability program to the vehicle braking subsystem to enable the vehicle braking subsystem to activate brakes of the vehicle based on the electronic parking brake request, use the brakes to control the non-driving wheels of the vehicle to be tightened, and deactivate the electronic stability program based on the control request for the electronic stability program.

In an exemplary embodiment, the vehicle intelligent driving subsystem is further configured to: acquire a third distance between the vehicle and an obstacle detected by the vehicle; and reduce, in a case of determining that the third distance is less than the safe distance, the torque value of the motor torque to a preset value, and control the vehicle to stop exiting with rotation.

In an exemplary embodiment, the vehicle intelligent driving subsystem is further configured to: send, in a case of detecting that the target object triggers a condition for pausing the exiting with rotation, an exit confirmation message to the target object; control, in a case of receiving a continuing exit instruction sent by the target object based on the exit confirmation message, the vehicle to exit with rotation, or to exit with rotation at a default yaw rate, where the default yaw rate is less than or equal to the target yaw rate; and reduce, in a case of receiving an exit end instruction sent by the target object based on the exit confirmation message, the torque value of the motor torque to the preset value, and control the vehicle to stop exiting with rotation.

In an exemplary embodiment, the vehicle intelligent driving subsystem is further configured to: determine that the vehicle satisfies a preset exit condition, where the preset exit condition includes at least one of: a current vehicle speed of the vehicle being less than a preset vehicle speed; a lateral acceleration of the vehicle being less than a first preset acceleration, and a longitudinal acceleration of the vehicle being less than a second preset acceleration; a current torque of the motor torque of the vehicle being greater than a preset torque; and a communication channel between the vehicle intelligent driving subsystem and the electric power steering system being normal, and a communication channel between the vehicle intelligent driving subsystem and the vehicle braking subsystem being normal.

In an exemplary embodiment, the vehicle intelligent driving subsystem is further configured to ensure that the vehicle satisfies a vehicle dynamics equation when controlling the vehicle to exit with rotation according to the target yaw rate, and the vehicle dynamics equation is expressed as follows: $\sum {F}_{X} > 0 , \sum {F}_{Y} < {F}_{RLBrk} + {F}_{RRBrk} , \sum {M}_{Z} > 0 ;$ where Σ *F_{X}* represents the force acting on the vehicle in a horizontal direction of a vehicle coordinate system, Σ *F_{Y}* represents the force acting on the vehicle in a vertical direction of the vehicle coordinate system, *F_{RLBrk}* represents the braking force of a left rear wheel of the vehicle, *F_{RRBrk}* represents the braking force of a right rear wheel of the vehicle, and Σ *M_{Z}* represents a yaw moment of the vehicle.

The method and system for controlling vehicle exit provided in this application can not only automatically analyze the vehicle environment and intelligently determine the exit direction, but also precisely control steering and braking, thereby ensuring a safe, efficient, and automatic exit process. The method is applicable to automatic exit in various complex environments, such as underground garages, narrow alleys, and slippery road surfaces, providing the driver with a more convenient and safe driving experience, and meanwhile providing robust technical support for the development of an intelligent parking system and the autonomous driving technology. Through interaction with the target object, the exit process becomes more flexible and controllable, enabling a timely response to unexpected situations and ensuring the safety and controllability of the exit process. Additionally, by setting condition checks before exit, it is ensured that the vehicle exits in an optimal state, thereby further enhancing the reliability and safety of the exit operation, and providing technical support for the improvement of intelligent transportation systems and the popularization of autonomous vehicles.

An embodiment of this application further provides a storage medium, including a stored program that, when executed, performs any one of the above-mentioned methods.

Optionally, in this embodiment, the storage medium may be configured to store program code for performing the following steps:
S1: Enter an exit mode based on an exit instruction from a target object, and acquire vehicle environmental information detected by a vehicle, wherein the exit instruction includes at least an exit speed.
S2: Determine an exit direction of the vehicle according to the vehicle environmental information and send a steering angle instruction to the electric power steering system, so as to enable the electric power steering system to control a steering wheel of the vehicle to rotate at a steering angle of the steering wheel corresponding to the exit direction.
S3: Send a braking instruction to the vehicle braking subsystem based on a motion state of the vehicle, so as to enable the vehicle braking subsystem to control non-driving wheels of the vehicle to be tightened.
S4: In a case where a motor torque of driving wheels of the vehicle increases from a first torque value to a second torque value, calculate a target wheel speed of the driving wheels of the vehicle according to a target yaw rate corresponding to the exit speed, and control the vehicle to exit with rotation at the target yaw rate according to the target wheel speed, wherein the first torque value represents a torque when the vehicle is in a static friction phase, and the second torque value represents a torque when the vehicle enters a kinetic friction phase.

An embodiment of this application further provides an electronic apparatus including a memory and a processor. The memory stores a computer program therein. The processor is configured to execute the computer program to perform the steps of any one of the above-mentioned method embodiments.

Optionally, the above-mentioned electronic apparatus may further include a transmission device and an input/output device, where the transmission device is connected with the above-mentioned processor, and the input/output device is connected with the above-mentioned processor.

Optionally, in this embodiment, the above-mentioned processor may be configured to perform the following steps through the computer program:
S1: Enter an exit mode based on an exit instruction from a target object, and acquire vehicle environmental information detected by a vehicle, where the exit instruction includes at least an exit speed.
S2: Determine an exit direction of the vehicle according to the vehicle environmental information and send a steering angle instruction to the electric power steering system, so as to enable the electric power steering system to control a steering wheel of the vehicle to rotate at a steering angle of the steering wheel corresponding to the exit direction.
S3: Send a braking instruction to the vehicle braking subsystem based on a motion state of the vehicle, so as to enable the vehicle braking subsystem to control non-driving wheels of the vehicle to be tightened.
S4: In a case where a motor torque of driving wheels of the vehicle increases from a first torque value to a second torque value, calculate a target wheel speed of the driving wheels of the vehicle according to a target yaw rate corresponding to the exit speed, and control the vehicle to exit with rotation at the target yaw rate according to the target wheel speed, where the first torque value represents a torque value when the vehicle is in a static friction phase, and the second torque value represents a torque value when the vehicle enters a kinetic friction phase.

Optionally, in this embodiment, the above-mentioned storage medium may include, but is not limited to, various media capable of storing program code, such as a USB flash drive, a read-only memory (ROM), a random access memory (RAM), a mobile hard disk, a magnetic disk, or an optical disk.

Optionally, an embodiment of this application further provides a computer program product. The above-mentioned computer program product includes a computer program. The computer program, when executed by a processor, performs the steps in any one of the above-mentioned method embodiments.

Optionally, an embodiment of this application further provides another computer program product, which includes a non-volatile computer-readable storage medium. The non-volatile computer-readable storage medium stores a computer program that, when executed by a processor, performs the steps in any one of the above-mentioned method embodiments.

Optionally, an embodiment of this application further provides a computer program, including computer instructions. The computer instructions are stored in a computer-readable storage medium. A processor of a computer device reads the computer instructions from the computer-readable storage medium, and the processor executes the computer instructions to cause the computer device to perform the steps in any one of the above-mentioned method embodiments.

Optionally, for specific examples in this embodiment, reference may be made to the examples described in the above-mentioned embodiments and optional implementations, and details will not be further described in this embodiment.

Apparently, those skilled in the art should understand that the modules or the steps in this application may be implemented through a general-purpose computing apparatus, and may be centralized on a single computing apparatus or distributed on a network formed by a plurality of computing apparatuses. Optionally, the modules or the steps may be implemented using program code executable by the computing apparatus, and then, may be stored in a storage apparatus for execution by the computing apparatus. In some cases, the steps shown or described may be performed in an order different from that presented herein, or may be implemented as separate produced integrated circuit modules, or a plurality of modules or steps among them may be implemented as a single produced integrated circuit module. Thus, this application is not limited to any specific combination of hardware and software.

The above descriptions are merely preferred implementations of this application. It should be noted that a plurality of improvements and modifications may also be made by those of ordinary skill in the technical field without departing from the principle of this application, and shall fall within the protection scope of this application.

## Claims

1. A method of controlling vehicle exit, applied to a vehicle intelligent driving subsystem of a vehicle, wherein the vehicle is equipped with an electric power steering system and a vehicle braking subsystem, and a communication channel is established between the vehicle intelligent driving subsystem and each of the electric power steering system and the vehicle braking subsystem, and the method comprises:
entering an exit mode based on an exit instruction from a target object, and acquiring vehicle environmental information detected by the vehicle, wherein the exit instruction comprises at least an exit speed (S202);
determining an exit direction of the vehicle according to the vehicle environmental information and sending a steering angle instruction to the electric power steering system, so as to enable the electric power steering system to control a steering wheel of the vehicle to rotate at a steering angle of the steering wheel corresponding to the exit direction (S204);
sending a braking instruction to the vehicle braking subsystem based on a motion state of the vehicle, so as to enable the vehicle braking subsystem to control one or more non-driving wheels of the vehicle to be tightened (S206); and
in a case where a motor torque of one or more driving wheels of the vehicle increases from a first torque value to a second torque value, calculating a target wheel speed of the one or more driving wheels of the vehicle according to a target yaw rate corresponding to the exit speed, and controlling the vehicle to exit with rotation at the target yaw rate according to the target wheel speed, wherein the first torque value represents a torque value when the vehicle is in a static friction phase, and the second torque value represents a torque value when the vehicle enters a kinetic friction phase (S208).

2. The method according to claim 1, wherein the determining an exit direction of the vehicle according to the vehicle environmental information comprises:
determining, in a case where the vehicle environmental information does not indicate detecting an obstacle, a default exit direction from available exit directions of the vehicle as the exit direction; or,
determining, in a case where the vehicle environmental information indicates detecting one or more obstacles and the one or more obstacles are located in the available exit directions, a first distance between the one or more obstacles and the vehicle, and determining the exit direction from the available exit directions according to a comparison result between the first distance and a safe distance.

3. The method according to claim 2, wherein the determining the exit direction from the available exit directions according to a comparison result between the first distance and a safe distance comprises:
determining, in a case where the comparison result indicates that the first distance is greater than the safe distance, the default exit direction as the exit direction or determining any of the available exit directions as the exit direction; and
excluding, in a case where the one or more obstacles are located in a first direction from the available exit directions and the comparison result indicates that the first distance is less than the safe distance, the first direction from the available exit directions to obtain a second direction, and determining the second direction as the exit direction.

4. The method according to claim 1, wherein the steering angle instruction comprises a steering angle start instruction and a steering angle end instruction, and the sending a steering angle instruction to the electric power steering system, so as to enable the electric power steering system to control a steering wheel of the vehicle to rotate at a steering angle of the steering wheel corresponding to the exit direction comprises:
sending the steering angle start instruction to the electric power steering system to enable the electric power steering system to control the steering wheel of the vehicle to start to rotate according to the steering angle of the steering wheel corresponding to the exit direction;
receiving a rotated angle of the steering wheel that is fed back by the electric power steering system; and
in a case of determining that the rotated angle is consistent with the steering angle of the steering wheel, sending the steering angle end instruction to the electric power steering system to enable the electric power steering system to control the steering wheel of the vehicle to stop rotating.

5. The method according to claim 1, wherein the braking instruction comprises an electronic parking brake request and a control request for an electronic stability program, and the sending a braking instruction to the vehicle braking subsystem based on a motion state of the vehicle, so as to enable the vehicle braking subsystem to control one or more non-driving wheels of the vehicle to be tightened comprises:
sending, in a case where the motion state of the vehicle is determined to be stationary, the electronic parking brake request and the control request for the electronic stability program to the vehicle braking subsystem to, so as to enable the vehicle braking subsystem to activate one or more brakes of the vehicle based on the electronic parking brake request, use the one or more brakes to control the one or more non-driving wheels of the vehicle to be tightened, and deactivate the electronic stability program based on the control request for the electronic stability program.

6. The method according to claim 1, wherein during a process of controlling the vehicle to exit with rotation at the target yaw rate according to the target wheel speed, the method further comprises:
acquiring a third distance between the vehicle and one or more obstacles detected by the vehicle; and
reducing, in a case of determining that the third distance is less than a safe distance, a torque value of the motor torque to a preset value, and controlling the vehicle to stop exiting with rotation.

7. The method according to claim 1, wherein during a process of controlling the vehicle to exit with rotation at the target yaw rate according to the target wheel speed, the method further comprises:
sending, in a case of detecting that the target object triggers a condition for pausing exiting with rotation, an exit confirmation message to the target object;
controlling, in a case of receiving a continuing exit instruction sent by the target object based on the exit confirmation message, the vehicle for exiting with rotation, or for exiting with rotation at a default yaw rate, wherein the default yaw rate is less than or equal to the target yaw rate; or, reducing, in a case of receiving an exit stopping instruction sent by the target object based on the exit confirmation message, a torque value of the motor torque to a preset value, and controlling the vehicle to stop exiting with rotation.

8. The method according to claim 1, wherein before the entering an exit mode based on an exit instruction from a target object, and acquiring vehicle environmental information detected by the vehicle, the method further comprises:
determining that the vehicle satisfies a preset exit condition,
wherein the preset exit condition comprises at least one of:
a current vehicle speed of the vehicle being less than a preset vehicle speed;
a lateral acceleration of the vehicle being less than a first preset acceleration, and a longitudinal acceleration of the vehicle being less than a second preset acceleration;
a current torque value of the motor torque of the vehicle being greater than a preset torque value; and
a communication channel between the vehicle intelligent driving subsystem and the electric power steering system being normal, and a communication channel between the vehicle intelligent driving subsystem and the vehicle braking subsystem being normal.

9. The method according to claim 1, further comprising:
the vehicle satisfying a vehicle dynamics equation when exiting with rotation at the target yaw rate, and the vehicle dynamics equation being expressed as follows: $\sum {F}_{X} > 0 , \sum {F}_{Y} < {F}_{RLBrk} + {F}_{RRBrk} , \sum {M}_{Z} > 0 ;$ where Σ *F_{X}* represents a force acting on the vehicle in a horizontal direction of a vehicle coordinate system, Σ *F_{Y}* represents a force acting on the vehicle in a vertical direction of the vehicle coordinate system, *F_{RLBrk}* represents a braking force of a left rear wheel of the vehicle, *F_{RRBrk}* represents a braking force of a right rear wheel of the vehicle, and Σ *M_{Z}* represents a yaw moment of the vehicle.

10. A system for controlling vehicle exit, comprising a vehicle intelligent driving subsystem (52), an electric power steering system (54), and a vehicle braking subsystem (56),
wherein the vehicle intelligent driving subsystem is configured to enter an exit mode based on an exit instruction from a target object, and acquire vehicle environmental information detected by a vehicle, wherein the exit instruction comprises at least an exit speed; determine an exit direction of the vehicle according to the vehicle environmental information and send a steering angle instruction to the electric power steering system, so as to enable the electric power steering system to control a steering wheel of the vehicle to rotate at a steering angle of the steering wheel corresponding to the exit direction; send a braking instruction to the vehicle braking subsystem based on a motion state of the vehicle, so as to enable the vehicle braking subsystem to control one or more non-driving wheels of the vehicle to be tightened; and
in a case where a motor torque of one or more driving wheels of the vehicle increases from a first torque value to a second torque value, calculate a target wheel speed of the one or more driving wheels of the vehicle according to a target yaw rate corresponding to the exit speed, and control the vehicle to exit with rotation at the target yaw rate according to the target wheel speed, wherein the first torque value represents a torque value when the vehicle is in a static friction phase, and the second torque value represents a torque value when the vehicle enters a kinetic friction phase.

11. The system according to claim 10, where the vehicle intelligent driving subsystem is configured to determine an exit direction of the vehicle according to the vehicle environmental information by following operations:
determining, in a case where the vehicle environmental information does not indicate detecting an obstacle, a default exit direction from available exit directions of the vehicle as the exit direction; or,
determining, in a case where the vehicle environmental information indicates detecting one or more obstacles and the one or more obstacles are located in the available exit directions, a first distance between the one or more obstacles and the vehicle, and determining the exit direction from the available exit directions according to a comparison result between the first distance and a safe distance.

12. The system according to claim 11, the vehicle intelligent driving subsystem is configured to determine the exit direction from the available exit directions according to a comparison result between the first distance and a safe distance by following operations:
determining, in a case where the comparison result indicates that the first distance is greater than the safe distance, the default exit direction as the exit direction or determining any of the available exit directions as the exit direction; and
excluding, in a case where the one or more obstacles are located in a first direction from the available exit directions and the comparison result indicates that the first distance is less than the safe distance, the first direction from the available exit directions to obtain a second direction, and determining the second direction as the exit direction.

13. The system according to claim 10, wherein the steering angle instruction comprises a steering angle start instruction and a steering angle end instruction, and the vehicle intelligent driving subsystem is configured to send a steering angle instruction to the electric power steering system, so as to enable the electric power steering system to control a steering wheel of the vehicle to rotate at a steering angle of the steering wheel corresponding to the exit direction by following operations:
sending the steering angle start instruction to the electric power steering system to enable the electric power steering system to control the steering wheel of the vehicle to start to rotate according to the steering angle of the steering wheel corresponding to the exit direction;
receiving a rotated angle of the steering wheel that is fed back by the electric power steering system; and
in a case of determining that the rotated angle is consistent with the steering angle of the steering wheel, sending the steering angle end instruction to the electric power steering system to enable the electric power steering system to control the steering wheel of the vehicle to stop rotating.

14. A computer-readable storage medium, comprising a stored program, wherein the program, when executed, performs the method according to any one of claims 1 to 9.

15. An electronic apparatus, comprising a memory and a processor, wherein the memory stores a computer program, and the processor is configured to perform the method according to any one of claims 1 to 9 through the computer program.
